# EUROPEAN PATENT APPLICATION

(11) **EP 4 539 253 A1**
(43) Date of publication of application: **16.04.2025**
(21) Application number: 23902287.4
(22) Date of filing: 23.10.2023
(51) Int. Cl.: H01Q 1/52, H01Q 1/38, H01Q 1/24, H01Q 21/24, H01Q 21/30

(54) **LOW-FREQUENCY FILTERING RADIATION UNIT AND ANTENNA ARRAY**

(30) Priority: 12.12.2022 CN 202211599210
(71) Applicant: CICT Mobile Communication Technology Co., Ltd., Canglong Island, Jiangxia District Wuhan, Hubei 430205 (CN)
(72) Inventor: SUN, Xiaoming, Wuhan, Hubei 430205 (CN); LIU, Peng, Wuhan, Hubei 430205 (CN); ZHOU, Hao, Wuhan, Hubei 430205 (CN)
(74) Representative: Studio Torta S.p.A.
(86) International application number: PCT/CN2023/125874
(87) International publication number: WO 2024/125087

(57) **Abstract**

The present application provides a low-frequency filtering radiation unit and an antenna array. The low-frequency filtering radiation unit comprises: a support member; and a radiation member provided on the support member, the radiation member comprising a substrate and a radiation surface provided on the substrate, the radiation surface being provided with a plurality of pairs of folded dipoles, and each pair of folded dipoles comprising filtering circuits and strip lines connected to the filtering circuits. The low-frequency filtering radiation unit and the high/low-frequency nested antenna array provided by the present application aim to solve the problem in the prior art of low-frequency radiation units interfering with high-frequency radiation units and having poor radiation performance.

## Description

### CROSS-REFERENCES TO RELATED APPLICATIONS

The present application claims priority to Chinese patent application No. 2022115992108 filed on December 12, 2022, entitled "Low-Frequency Filtering Radiation Unit and Antenna Array", which is hereby incorporated by reference in its entirety.

### FIELD

The present application relates to the field of antenna technologies, and in particular, to a low frequency filtering radiation unit and an antenna array.

### BACKGROUND

With the rapid development of 5G communication technology, it is becoming increasingly important to integrate 3G, 4G and 5G base stations into one-piece. In addition to greatly improving a utilization rate of space, it may also greatly reduce costs and enhance the intelligence of base stations. However, when multiple types of multi-band antennas are compactly disposed at a reflection plate, the electromagnetic environment inside an antenna becomes quite complex, a spacing between a high frequency radiation unit and a low frequency radiation unit continues to decrease, and a nested phenomenon or a stacked phenomenon occurs between the designed high frequency radiation unit and the designed low frequency radiation unit, which will lead to mutual interference between antennas at different frequency bands. The influence of a lower-band antenna on a higher-band antenna is particularly obvious, causing a pattern of the high frequency radiation unit to be distorted.

### BRIEF SUMMARY

The present application provides a low frequency filtering radiation unit and an antenna array, to solve a problem in the traditional art that a low frequency radiation unit interferes with the high frequency radiation unit, resulting in poor radiation performance of the high frequency unit.

In view of the problem in the related art, the present application provides a low frequency filtering radiation unit, including:
a support member; and
a radiation member, disposed at the support member, where the radiation member includes a substrate and a radiation surface disposed at the substrate, the radiation surface is equipped with a plurality of pairs of folded dipoles, and each pair of folded dipoles includes a filtering circuit and a stripline connecting the filtering circuit.

According to the low frequency filtering radiation unit provided by the present application, the radiation surface is equipped with two pairs of folded dipoles, and the two pairs of folded dipoles are orthogonally disposed and polarized orthogonally.

According to the low frequency filtering radiation unit provided by the present application, the filtering circuit includes a double helically disposed strip and a strip coupling element, and a line type or size of the double helically disposed strip and a coupling area of the strip coupling element are used to adjust a filtering band of the filtering circuit.

According to the low frequency filtering radiation unit provided by the present application, a disposal form of the double helically disposed strip includes one or more of a square helical, a circular helical and a triangular helical.

According to the low frequency filtering radiation unit provided by the present application, a line width of the stripline is no less than a line width of the double helically disposed strip.

According to the low frequency filtering radiation unit provided by the present application, the substrate is equipped with a plurality of stacked-disposed base layers, and the filtering circuit is disposed at each base layer.

According to the low frequency filtering radiation unit provided by the present application, each folded dipole is rectangularly disposed at the substrate, and the filtering circuit and the stripline are disposed around a corresponding folded dipole.

According to the low frequency filtering radiation unit provided by the present application, the support member includes a bottom plate and a balun seat disposed at the bottom plate, the balun seat is electrically connected to the radiation member, and the balun seat includes two balun substrates disposed orthogonally.

According to the low frequency filtering radiation unit provided by the present application, a size L of the substrate is λ/4<L<λ/2, a height H of the balun seat is λ/4<L<λ/2, a length of the double helically disposed strip is a quarter wavelength of a filtering frequency band, and a strip coupling depth d of the strip coupling element is 0.5 <d < 10 mm.

According to the low frequency filtering radiation unit provided by the present application, the filtering frequency band is an operating frequency band of the high frequency unit.

The present application further provides an antenna array, including a low frequency filtering radiation unit as described in any of the above.

### BRIEF DESCRIPTION OF THE DRAWINGS

To illustrate solutions in the present application more clearly, drawings required for the description of the embodiment is briefly introduced below. It should be noted that the drawings described below are some embodiments of the present application and other drawings may be obtained for those skilled in the art based on these drawings without creative work.
FIG. 1 is a three-dimensional schematic structural diagram of a low frequency filtering radiation unit according to an embodiment of the present application;
FIG. 2 is a top view schematic diagram of a structure of FIG. 1;
FIG. 3 is a schematic diagram of a filtering circuit in FIG. 1;
FIG. 4 is a schematic diagram of a filtering effect simulation of FIG. 1;
FIG. 5 is a schematic structural diagram of an antenna array according to an embodiment of the present application; and
FIG. 6 is a schematic structural diagram of an antenna array according to an embodiment of the present application;

Reference numerals: 1: low frequency filtering radiation unit; 2: support member; 3: radiation member; 4: balun seat; 5: substrate; 6: radiation surface; 7: folded dipole; 8: filtering circuit; 9: stripline; 10: strip; 11: strip coupling element; 12: bottom plate; 20: high frequency unit.

### DETAILED DESCRIPTION

To illustrate the objectives, solutions and advantages of the application, the solutions in the present application are described clearly and completely below in combination with the drawings in the application. The described embodiments are part of the embodiments of the application, not all of them. All other embodiments obtained by those skilled in the art based on the embodiments of the present application without creative effort belong to the scope of the present application.

In the description of the embodiments of the present application, it should be noted that the terms "center", "longitudinal", "lateral", "upper", "lower", "front", "back", "left", "right", "vertical", "horizontal", "top", "bottom", "inside", "outside" and the like indicate the orientation or position relationship based on the orientation or position relationship shown in the drawings, which is only for the convenience of describing embodiments of the present application and simplifying the description, and does not indicate or imply that the apparatus or element referred to must have a specific orientation, be constructed and operated in a specific orientation, and therefore cannot be understood as a limitation on embodiments of the present application. In addition, the terms "first", "second", and "third" are only used for descriptive purposes and cannot be understood as indicating or implying relative importance.

In the description of the embodiments of the present application, it should be noted that, unless otherwise clearly specified and limited, the terms "connected with" and "connected to" should be understood in a broad sense, for example, it can be a fixed connection, a detachable connection, or an integral connection; it can be a mechanical connection or an electrical connection; and it can be directly connected or indirectly connected through an intermediate media. For those of ordinary skilled in the art, specific meanings of the above terms in embodiments of the present application can be understood based on specific situations.

In embodiments of the present application, unless otherwise clearly specified and limited, the first feature "above" or "below" the second feature may be that the first and second features are in direct contact, or the first and second features are in indirect contact through an intermediate media. Moreover, the first feature "above", "above" and "above" the second feature may be that the first feature is directly above or obliquely above the second feature, or simply indicates that the first feature is higher in level than the second feature. The first feature "below", "below" and "below" the second feature may be that the first feature is directly below or obliquely below the second feature, or simply indicates that the first feature is lower in level than the second feature.

In the description of this specification, the description of reference terms such as "one embodiment", "some embodiments", "examples", "specific examples", or "some examples" means that the specific features, structures, materials or characteristics described in conjunction with the embodiment or example are included in at least one embodiment or example of the embodiments of the present application. In this specification, the schematic representation of the above terms does not necessarily refer to the same embodiment or example. Moreover, the specific features, structures, materials or characteristics described may be combined in any one or more embodiments or examples in a suitable manner. In addition, those skilled in the art may combine and combine different embodiments or examples and features of different embodiments or examples described in this specification without contradiction.

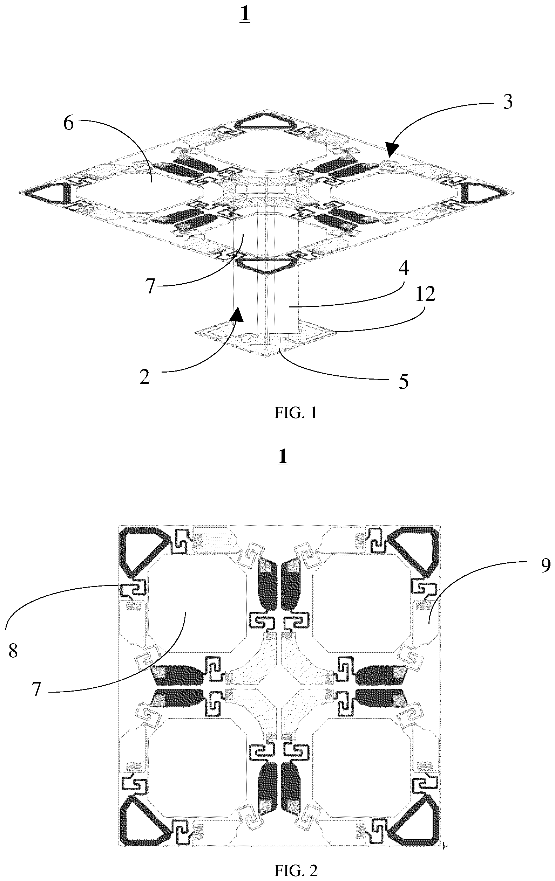

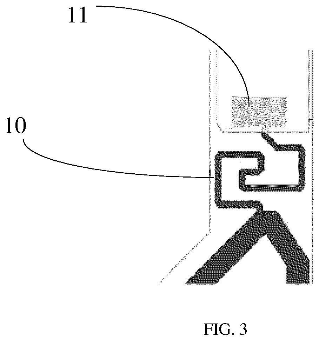

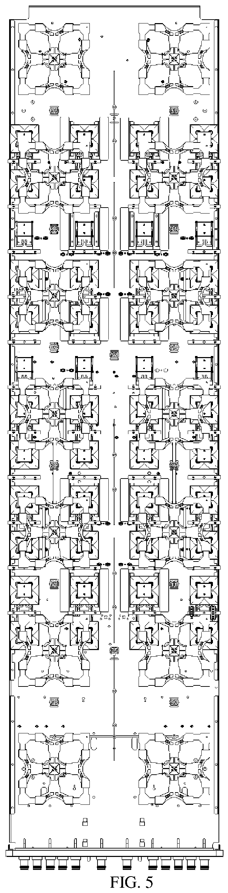

The low frequency filtering radiation unit 1 and the antenna array provided by the present application are described below in conjunction with FIG. 1 to FIG. 6.

The present application provides a low frequency filtering radiation unit 1, including a support member 2 and a radiation member 3, where the radiation member 3 is disposed at the support member 2, the radiation member 3 includes a substrate 5 and a radiation surface 6 disposed at the substrate 5, the radiation surface 6 is equipped with a plurality of pairs of folded dipoles 7, and each pair of folded dipoles 7 includes a filtering circuit 8 and a stripline 9 connecting the filtering circuit 8. In the low frequency filtering radiation unit 1 provided by the present application, by disposing the filtering circuit 8 and the stripline 9, not only the filtering of external other frequency band radio waves is realized, but also the electrical length of an antenna radiator circuit is increased without increasing the size of the radiation surface 6, thereby increasing the gain of the antenna.

In the solutions provided by the present application, referring to FIG. 1 and FIG. 2, the radiation surface 6 is equipped with two pairs of folded dipoles 7, and the two pairs of folded dipoles 7 are orthogonally disposed and polarized orthogonally. Specifically, the filtering circuit 8 includes a double helically disposed strip 10 and a strip coupling element 11. The double helically disposed strip 10 is equivalent to an inductance in the filtering circuit 8, and the strip coupling element 11 is equivalent to a capacitance in the filtering circuit 8, which together constitute an equivalent LC filtering circuit. The corresponding inductance and capacitance may vary by changing both the line type and size of the double helically disposed strip 10 and a coupling area of the strip coupling element 11. The filtering band of the filtering circuit 8 is then changed, to filter out radiation waves of antennas of other frequency bands radiated from space, thereby solving a cross-band interference problem of antennas used in a certain frequency band in 3G/4G/5G base station antennas to antennas operating in other frequency bands.

Further, a disposal form of the double helically disposed strip 10 includes one or more of a square helical, a circular helical and a triangular helical. In addition, to ensure the filtering effect, a line width of the stripline 9 is no less than a line width of the double helically disposed strip 10.

Specifically, the substrate 5 is equipped with a plurality of stacked-disposed base layers, and the filtering circuit 8 is disposed at each base layer, which is conducive to reducing the size of the substrate 5. Correspondingly, referring to the figures, in the solutions provided by the present application, each folded dipole 7 is rectangularly disposed at the substrate 5, and the filtering circuit 8 and the stripline 9 are disposed around a corresponding folded dipole 7. Each folded dipole 7 is distributed at a square area on the substrate 5, and the filtering circuit 8 and the stripline 9 are continuously provided along the square area. Therefore, not only the filtering of external other frequency band radio waves is realized, but also the electrical length of an antenna radiator circuit is increased without increasing the size of the radiation surface 6, thereby increasing the gain of the antenna.

Further, the support member 2 includes a bottom plate 12 and a balun seat 4 disposed at the bottom plate 12, the balun seat 4 is electrically connected to the radiation member 3, and the balun seat 4 includes two balun substrates disposed orthogonally. Each balun substrate is disposed with a balun and a corresponding matching circuit. The matching circuit, the filtering circuit 8 and the stripline 9 are all disposed by printing a copper layer on the substrate 5 or the balun substrate.

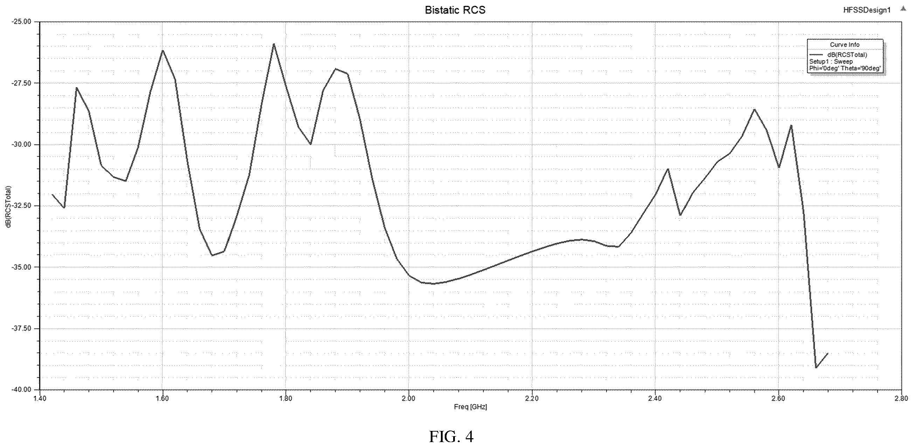

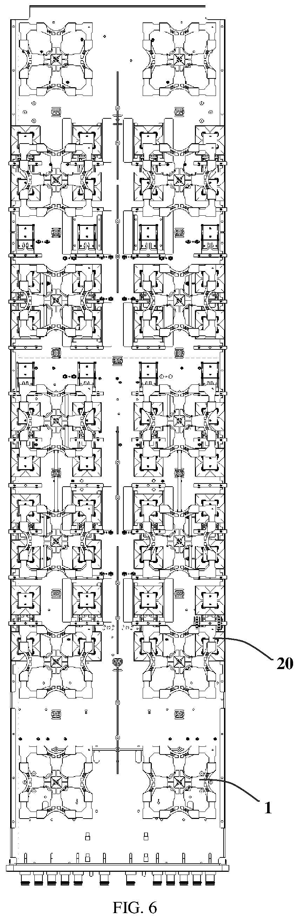

Specifically, the present embodiment provides a low frequency filtering radiation unit 1, the substrate 5 is disposed as a square substrate 5, a size L is λ/4<L<λ/2, a height H of the balun seat 4 is λ/4<L<λ/2, a length of the double helically disposed strip 10 is a quarter wavelength of a filtering band, and the strip coupling depth d of the strip coupling element 11 is 0.5<d<10 mm. FIG. 6 shows the low frequency filtering radiation unit 1 and the high frequency unit 20. The filtering frequency band is an operating frequency band of the high frequency unit 20. Referring to FIG. 4, the low frequency filtering radiation unit 1 has a good filtering effect at a frequency band of 1.4 GHZ-2.69 GHz, and the value of a radar reflection cross section (RCS), which is an indicator describing spatial radiation interference, in the entire frequency band is lower than 25 dB, which can better reduce the coupling effect of the low frequency radiation unit on the high frequency band radiation unit.

The present application further provides an antenna array, including the above low frequency filtering radiation unit 1. Since the main inventive point of the present application is the low frequency filtering radiation unit 1, the relevant structure of the antenna array is not be described in detail.

Finally, it should be noted that the above embodiments are only used to explain the solutions of the present application, and are not limited thereto. Although the present application has been described in detail with reference to the foregoing embodiments, it should be understood by those skilled in the art that they may still modify the technical solutions documented in the foregoing embodiments and make equivalent substitutions to a part of the features; these modifications and substitutions do not make the essence of the corresponding solutions depart from the scope of the solutions of various embodiments of the present application.

## Claims

1. A low frequency filtering radiation unit, comprising:
a support member; and
a radiation member, disposed at the support member, wherein the radiation member comprises a substrate and a radiation surface disposed at the substrate, the radiation surface is equipped with a plurality of pairs of folded dipoles, and each pair of folded dipoles comprises a filtering circuit and a stripline connecting the filtering circuit.

2. The low frequency filtering radiation unit of claim 1, wherein the radiation surface is equipped with two pairs of folded dipoles, and the two pairs of folded dipoles are orthogonally distributed and polarized orthogonally.

3. The low frequency filtering radiation unit of claim 1, wherein the filtering circuit comprises a double helically disposed strip and a strip coupling element.

4. The low frequency filtering radiation unit of claim 3, wherein a line type or size of the double helically disposed strip and a coupling area of the strip coupling element are used to adjust a filtering frequency band of the filtering circuit.

5. The low frequency filtering radiation unit of claim 3, wherein a disposal form of the double helically disposed strip comprises one or more of a square helical, a circular helical and a triangular helical.

6. The low frequency filtering radiation unit of claim 3, wherein a line width of the stripline is no less than a line width of the double helically disposed strip.

7. The low frequency filtering radiation unit of claim 3, wherein the substrate is equipped with a plurality of stacked-disposed base layers, and the filtering circuit is disposed at each base layer.

8. The low frequency filtering radiation unit of claim 3, wherein each folded dipole is rectangularly disposed at the substrate, and the filtering circuit and the stripline are disposed around a corresponding folded dipole.

9. The low frequency filtering radiation unit of claim 3, wherein the support member comprises a bottom plate and a balun seat disposed at the bottom plate, the balun seat is electrically connected to the radiation member, and the balun seat comprises two balun substrates disposed orthogonally.

10. The low frequency filtering radiation unit of claim 8, wherein a size L of the substrate is λ/4 <L < λ/2, a height H of the balun seat is λ/4 <L < λ/2, a length of the double helically disposed strip is a quarter wavelength of a filtering frequency band, and a strip coupling depth d of the strip coupling element is 0.5 <d < 10 mm.

11. The low frequency filtering radiation unit of claim 9, wherein the filtering frequency band is an operating frequency band of the high frequency unit.

12. An antenna array, comprising the low frequency filtering radiation unit according to any one of claims 1 to 11.
